# EUROPEAN PATENT SPECIFICATION

(11) **EP 4 502 913 B1**
(45) Date of publication and mention of the grant of the patent: **15.04.2026**
(21) Application number: 22938613.1
(22) Date of filing: 19.04.2022
(51) Int. Cl.: G06Q 50/06, H02J 3/00, G06N 3/08

(54) **ARTIFICIAL INTELLIGENCE APPARATUS FOR PREDICTING POWER CONSUMPTION, AND METHOD THEREFOR**
VORRICHTUNG MIT KÜNSTLICHER INTELLIGENZ ZUR VORHERSAGE DES STROMVERBRAUCHS UND VERFAHREN DAFÜR
APPAREIL D'INTELLIGENCE ARTIFICIELLE POUR PRÉDIRE LA CONSOMMATION D'ÉNERGIE, ET PROCÉDÉ ASSOCIÉ

(43) Date of publication of application: 05.02.2025
(73) Proprietor: LG Electronics Inc., Yeongdeungpo-gu Seoul 07336 (KR)
(72) Inventor: KIM, Jaehong, Seoul 06772 (KR); CHOI, Heeyeon, Seoul 06772 (KR)
(74) Representative: Vossius & Partner Patentanwälte Rechtsanwälte mbB
(86) International application number: PCT/KR2022/005588
(87) International publication number: WO 2023/204321

(56) References cited:
- JP-A- 2004 297 854
- JP-A- 2014 187 839
- JP-A- 2017 017 777
- KR-A- 20180 101 795
- KR-A- 20200 068 070
- KR-A- 20220 034 329
- KR-A- 20220 034 329
- US-A1- 2021 215 370

## Description

### [Technical Field]

The present disclosure relates to an artificial intelligence apparatus and method for predicting an amount of power consumption occurring in a home.

### [Background Art]

In general, an energy storage system (ESS) refers to an apparatus that improves power usage efficiency by storing energy produced from renewable energy sources such as solar and wind power in a storage device (for example, a battery) and then supplying electricity when needed.

For these energy storage systems (ESS), it is important to accurately predict the amount of power consumption occurring in a home to improve energy efficiency.

In this way, in order to accurately predict the amount of power consumption within a home, it is necessary to utilize not only external environmental data but also the products used and usage patterns of customers within the home.

US 2021/215370 A1 relates to an artificial intelligence based apparatus and method for forecasting energy usage, which are capable of automatically collecting data on monthly power usage to forecast energy usage.

JP 2014 187839 A relates to power management device being configured to manage (n) pieces of electric equipment provided in a home, and includes: a storage part, which stores an electric power pattern database, in which symbol information related to waveform patterns of electric power consumptions of the respective pieces of electric equipment are registered, corresponding to the respective pieces of electric equipment; an acquisition part which acquires the total electric power consumption in the home and electric power consumptions from (m) measuring instruments provided corresponding to (m) (m < n) pieces of electric equipment; a calculation part, which calculates an electric power consumption of electric equipment provided with no measuring instrument based upon the total electric power consumption in the home and the electric power consumptions from the (m) measuring instruments that the acquisition part acquires; and an estimation part, which estimates electric equipment calculated based upon the calculation result calculated by the calculation part and the electric power pattern database stored in the storage part.

KR 2022 0034329 A relates to relates to an electric charge saving analysis device and an electric charge saving analysis method.

### [Disclosure]

The invention is set out in the appended set of claims. Any references in the following description to embodiments, objects, aspects and/or examples which are not covered by the appended claims are considered as not being part of the present invention.

### [Technical Problem]

An object of the present disclosure is to solve the above-mentioned problems and other problems.

An object of the present disclosure is to provide an artificial intelligence apparatus capable of accurately predicting an amount of power consumption in a home by estimating power consumption data of electronic devices whose usage patterns are unknown using a neural network model.

In addition, an object of the present disclosure is to provide an artificial intelligence apparatus capable of providing accurate energy consumption information for each electronic device to a user by predicting an amount of power consumption in a home based on energy information and usage pattern information for the electronic device.

In addition, an object of the present disclosure is to provide an artificial intelligence apparatus capable of providing users with accurate, specific, and highly reliable home energy consumption information by predicting an amount of power consumption in a home based on power consumption data of each electronic device, user schedule data, and external environment data using a neural network model.

### [Technical Solution]

An artificial intelligence apparatus according to an embodiment of the present disclosure includes a memory storing power consumption data for electronic devices in a home; and a processor predicting power consumption in a home based on the power consumption data, in which the processor can obtain power consumption data for pre-registered electronic devices, check whether there is a specific electronic device for which the power consumption data has not been obtained, and if there is a specific electronic device for which the power consumption data has not been obtained, obtain mixed power data consumed in a current home, classifies the obtained mixed power data into a plurality of individual power data, extract individual power data matching the specific electronic device, estimate power consumption data for the specific electronic device based on the extracted individual power data, and predict an amount of power consumption in a home based on power consumption data for all pre-registered electronic devices.

A method for predicting power consumption of an artificial intelligence apparatus according to an embodiment of the present disclosure may include obtaining power consumption data for a pre-registered electronic device; checking whether there is a specific electronic device for which the power consumption data has not been obtained; obtaining mixed power data consumed in a current home if there is a specific electronic device for which the power consumption data has not been obtained; classifying the obtained mixed power data into a plurality of individual power data and extracting individual power data matching the specific electronic device; estimating power consumption data for the specific electronic device based on the extracted individual power data; and predicting the amount of power consumption in a home based on power consumption data for all the pre-registered electronic devices.

### [Advantageous Effect]

According to one embodiment of the present disclosure, an artificial intelligence apparatus can accurately predict an amount of power consumption in a home by estimating power consumption data of an electronic device whose usage pattern is unknown using a neural network model.

In addition, according to one embodiment of the present disclosure, the artificial intelligence apparatus can provide accurate energy consumption information for each electronic device to the user by predicting an amount of power consumption in a home based on energy information and usage pattern information for the electronic device.

In addition, according to one embodiment of the present disclosure, the artificial intelligence apparatus can provide accurate, specific, and highly reliable home energy consumption information to the user by predicting an amount of power consumption in the home based on power consumption data of each electronic device, user schedule data, and external environment data using a neural network model.

### [Description of Drawings]

FIG. 1 illustrates an artificial intelligence apparatus according to an embodiment of the present disclosure.
FIG. 2 illustrates an artificial intelligence server according to an embodiment of the present disclosure.
FIG. 3 illustrates an artificial intelligence apparatus applied to an energy storage system according to one embodiment of the present disclosure.
FIG. 4 is a view for explaining an electronic device registration process for predicting an amount of power consumption according to one embodiment of the present disclosure.
FIGS. 5 and 6 are views for explaining an energy source estimation process of a neural network model according to an embodiment of the present disclosure.
FIG. 7 is a view for explaining a process of predicting an amount of power consumption in a home using a neural network model according to an embodiment of the present disclosure.
FIG. 8 is a view for explaining information on prediction results of an amount of power consumption in a home according to one embodiment of the present disclosure.
FIG. 9 is a flowchart for explaining a method for predicting power consumption of an artificial intelligence apparatus according to an embodiment of the present disclosure.

### [Best Mode]

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the disclosure in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

Also, throughout this specification, a neural network and a network function may be used interchangeably. The neural network may be constituted by a set of interconnected computational units, which may be generally referred to as "nodes". These "nodes" may also be referred to as "neurons". The neural network is configured to include at least two or more nodes. Nodes (or neurons) constituting neural networks may be interconnected by one or more "links".

### <Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of training an artificial neural network in a state in which a label for learning data is given, and the label may mean the correct answer (or result value) that the artificial neural network must infer when the learning data is input to the artificial neural network. The unsupervised learning may refer to a method of training an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

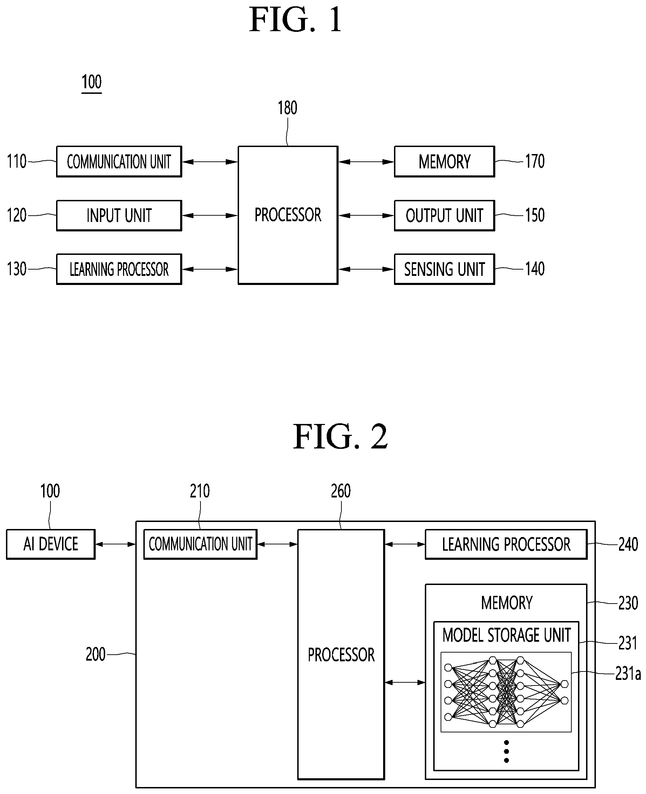

FIG. 1 illustrates an AI device 100 according to an embodiment of the present disclosure.

The AI device (or an AI apparatus) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other AI devices 100a to 100e and the AI server 200 by using wire/wireless communication technology. For example, the communication unit 110 may transmit and receive sensor information, a user input, a learning model, and a control signal to and from external devices.

The communication technology used by the communication unit 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 120 may acquire various kinds of data.

In this case, the input unit 120 may include a camera for inputting a video signal, a microphone for receiving an audio signal, and a user input unit for receiving information from a user. The camera or the microphone may be treated as a sensor, and the signal obtained from the camera or the microphone may be referred to as sensing data or sensor information.

The input unit 120 may acquire a learning data for model learning and an input data to be used if an output is obtained by using learning model. The input unit 120 may acquire raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 130 may perform AI processing together with the learning processor 240 of the AI server 200 of FIG. 2.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may acquire at least one of internal information about the AI device 100, ambient environment information about the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

At this time, the output unit 150 may include a display unit for outputting time information, a speaker for outputting auditory information, and a haptic module for outputting haptic information.

The memory 170 may store data that supports various functions of the AI device 100. For example, the memory 170 may store input data obtained by the input unit 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the obtained intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI apparatus 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in the memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network/ The AI server 200 may include a plurality of servers to perform distributed processing or may be defined as a 5G network. In this case, the AI server 200 may be included as a partial configuration of the AI device 100, and may perform at least part of the AI processing together.

The AI server 200 may include a communication unit 210, a memory 230, a learning processor 240, a processor 260, and the like.

The communication unit 210 may transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

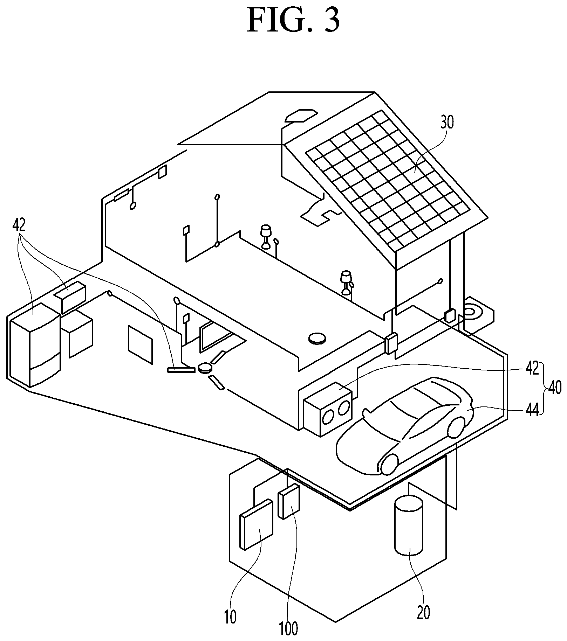

FIG. 3 illustrates an artificial intelligence apparatus applied to an energy storage system (ESS) according to one embodiment of the present disclosure.

As illustrated in FIG. 3, the energy storage system may include a battery module 10 including a plurality of battery cells, a power storage 20, a power generation plant 30 including solar panels, and an artificial intelligence apparatus 100 that predicts an amount of power consumption occurring in a home.

The artificial intelligence apparatus 100 may include a memory that stores power consumption data for electronic devices 40 in the home, and a processor that predicts an amount of power consumption in a home based on the power consumption data.

Here, home electronic devices 40 may include stationary electronic devices 42 such as refrigerators, washing machines, lights, and ventilators, and mobile electronic devices 44 such as electric vehicles and electric bikes.

In addition, the processor of the artificial intelligence apparatus 100 can obtain power consumption data for a pre-registered electronic device 40, check whether there is a specific electronic device for which power consumption data has not been obtained, obtain mixed power data currently consumed in a home if there is a specific electronic device for which power consumption data has not been obtained, classifies the obtained mixed power data into a plurality of individual power data, extract individual power data matching a specific electronic device, estimate power consumption data for a specific electronic device based on the extracted individual power data, and predict an amount of power consumption in a home based on power consumption data for all pre-registered electronic devices.

Here, when the processor obtains power consumption data for a pre-registered electronic device 40, the processor can obtain power consumption data including energy information and usage pattern information for the pre-registered electronic device.

For example, the energy information is energy information preset by the manufacturer of the electronic device 40 for the electronic device, and may include at least one of the rated voltage, power consumption, and energy consumption efficiency of the electronic device, but this is only an example and is not limited thereto.

In addition, the usage pattern information relates to the user's electronic device usage pattern of using the electronic device 40, and may include at least one of the number of times the electronic device is used, the usage time of the electronic device, the usage cycle of the electronic device, the usage function of the electronic device, the number of times a specific function is used, the usage time of a specific function, and the usage cycle of a specific function, but this is only an example and is not limited thereto.

**In** some cases, the processor may obtain power consumption data corresponding to the main function of the pre-registered electronic device.

**In** other words, the processor can obtain the same power consumption data for electronic devices with similar main functions among pre-registered electronic devices, and can obtain different power consumption data for electronic devices with different main functions among pre-registered electronic devices.

Here, the processor can obtain power consumption data that partially overlaps in the case of electronic devices among composite electronic devices having multiple main functions, where the main functions partially overlap.

For example, a processor may obtain first power consumption data for a first electronic device performing a first main function, and obtain second power consumption data for a second electronic device performing a second main function different from the first main function, wherein energy information and usage pattern information included in the first power consumption data may be different from energy information and usage pattern information included in the second power consumption data.

For example, a processor may obtain first power consumption data for an air conditioner that performs cooling as its main function, and second power consumption data for a washing machine that performs washing as its main function, but energy information and usage pattern information included in the first power consumption data may be different from energy information and usage pattern information included in the second power consumption data.

**In** another case, the processor can obtain power consumption data corresponding to whether the pre-registered electronic device is capable of moving due to battery charging.

**In** other words, the processor can obtain the same power consumption data in the case of mobile electronic devices among the pre-registered electronic devices, and can obtain different power consumption data in the case of stationary electronic devices among the pre-registered electronic devices.

For example, the processor may obtain third power consumption data for a third mobile electronic device and obtain fourth power consumption data for a fourth stationary electronic device, and energy information and usage pattern information included in the third power consumption data may be different from energy information and usage pattern information included in the fourth power consumption data.

For example, the processor may obtain third power consumption data for an electric vehicle or an electric bike, which is a mobile electronic device 44, and fourth power consumption data for a light or a ventilator, which is a stationary electronic device 42, and energy information and usage pattern information included in the third power consumption data may be different from energy information and usage pattern information included in the fourth power consumption data.

**In** addition, when the processor obtains power consumption data for a pre-registered electronic device 40, the processor can perform a communication connection with the pre-registered electronic device, store the power consumption data received from the electronic device connected to the communication in the memory, and obtain the power consumption data for the pre-registered electronic device from the memory.

Next, when checking whether there is a specific electronic device for which power consumption data has not been obtained, the processor can match the obtained power consumption data to a pre-registered electronic device, and check whether the power consumption data of all pre-registered electronic devices has been matched to check whether there is a specific electronic device for which power consumption data has not been obtained.

Here, the processor may recognize an electronic device among the pre-registered electronic devices 40 for which no communication connection is performed as a specific electronic device from which power consumption data is not received.

For example, in the case of electronic devices manufactured by the same manufacturer among pre-registered electronic devices 40, communication connection is performed through the integrated app of the electronic device, so that usage pattern information of the electronic device can be obtained, but, in the case of electronic devices manufactured by other manufacturers, communication connection is not performed through the integrated app, so the manufacturer cannot obtain usage pattern information of other electronic devices.

Accordingly, the processor can recognize an electronic device among the pre-registered electronic devices 40 for which a communication connection is not performed as a specific electronic device from which usage pattern information cannot be obtained.

Next, when the processor obtains mixed power data currently consumed within a home, the processor can obtain mixed power data in which power consumption waveforms of electronic devices consuming power at the current point in time within the home are mixed.

Next, when extracting individual power data matching a specific electronic device, the processor can input the obtained mixed power data into a pre-learned neural network model to classify it into a plurality of individual power data, and extract individual power data matching a specific electronic device among the plurality of classified individual power data.

For example, the neural network model may include an energy source classification model and an energy source estimation model.

The neural network model can input mixed power data into an energy source classification model to classify it into a number of individual power data, and input the individual power data into an energy source estimation model to estimate a specific electronic device that is the energy source of the individual power data.

Additionally, the neural network model may be pre-learned using power data of an electronic device having a specific power consumption waveform and energy information of the corresponding electronic device as input values.

Here, the neural network model may be pre-learned using energy information of electronic devices, including rated voltage, power consumption, and energy consumption efficiency, as input values.

In addition, when estimating power consumption data for a specific electronic device, the processor can estimate power consumption data including energy information and usage pattern information for the specific electronic device based on individual power data having a specific power consumption waveform.

For example, the energy information may include at least one of a rated voltage, power consumption, and energy consumption efficiency of a specific electronic device, but this is only an example and is not limited thereto.

In addition, the usage pattern information may include at least one of the number of times a specific electronic device is used, the usage time of a specific electronic device, the usage cycle of a specific electronic device, and the usage function of a specific electronic device, but this is only an example and is not limited thereto.

Here, energy information is input by a user when registering a specific electronic device and stored in memory, and usage pattern information may be estimated based on individual power data and stored in memory when extracting individual power data having a specific power consumption waveform.

In some cases, when registering a particular electronic device, the processor may obtain energy information about the particular electronic device through communication with an external server based on the product number when the user enters the product number for the particular electronic device.

Next, when predicting an amount of power consumption in a home, the processor can predict an amount of power consumption in a home by inputting first power consumption data obtained from a pre-registered electronic device and second power consumption data estimated from a specific electronic device from which the first power consumption data has not been obtained into a pre-learned neural network model.

For example, a neural network model may include a time series forecasting model that predicts the value of t+1 at time t.

In addition, the processor may predict an amount of power consumption in a home by additionally inputting at least one of user schedule data and external environment data into a pre-learned neural network model when predicting an amount of power consumption in a home.

Here, the processor can obtain user schedule data stored in the memory or estimate user schedule data based on user activity patterns stored in the memory and use it as an input value of the neural network model.

Additionally, the processor can obtain external environmental data including day of the week, weather, temperature, season, location, and regional information and use them as input values for the neural network model.

Next, the processor can generate prediction result information based on an amount of the predicted power consumption in a home when predicting an amount of the power consumption in a home.

Here, the processor, when generating the prediction result information, can generate the prediction result information including the usability and energy consumption status information of each electronic device in a home.

Throughout this specification, the terms neural network, network function and neural network may be used interchangeably.

The neural network model described above may be an artificial neural network (ANN) trained to output reconstructed data that is similar to the input data for the input data. An artificial neural network (ANN) is a model used in machine learning, and may refer to a model in general that has problem-solving capabilities and is composed of artificial neurons (nodes) that form a network by combining synapses.

For example, the neural network model may be an artificial neural network model based on an autoencoder. The neural network model based on an autoencoder may include, but is not limited to, an encoder part that reduces the dimensionality of data by making the number of neurons in the hidden layer smaller than the number of neurons in the input layer, and a decoder part that reconstructs the data by expanding the dimensionality of data from the hidden layer again, and has an output layer having the same number of neurons as the number of neurons in the input layer.

In addition, the neural network model may be an artificial neural network model based on a generative adversarial network (GAN). A generative adversarial network (GAN) may be an artificial neural network in which a generator and a discriminator are learned adversarially, but is not limited thereto.

In addition, the neural network model may be a deep neural network. A deep neural network (DNN) may refer to a neural network that includes a plurality of hidden layers in addition to an input layer and an output layer. Using a deep neural network, latent structures of data can be identified. In other words, latent structures of photos, text, videos, voices, and music (for example, what objects are in the photo, what the content and emotion of the text are, what the content and emotion of the voice are, or the like) can be identified. A deep neural network may include a convolutional neural network (CNN), a recurrent neural network (RNN), a restricted Boltzmann machine (RBM), a deep belief network (DBN), a Q network, a U network, a Siamese network, or the like.

In this way, the artificial intelligence apparatus of the present disclosure can accurately predict an amount of power consumption in a home by estimating power consumption data of an electronic device whose usage pattern is unknown using a neural network model.

In addition, the artificial intelligence apparatus of the present disclosure can provide accurate energy consumption information for each electronic device to the user by predicting an amount of power consumption in a home based on energy information and usage pattern information for the electronic device.

In addition, the artificial intelligence apparatus of the present disclosure can provide accurate, specific, and highly reliable energy consumption information in a home to the user by predicting an amount of power consumption in a home based on power consumption data of each electronic device, user schedule data, and external environment data using a neural network model.

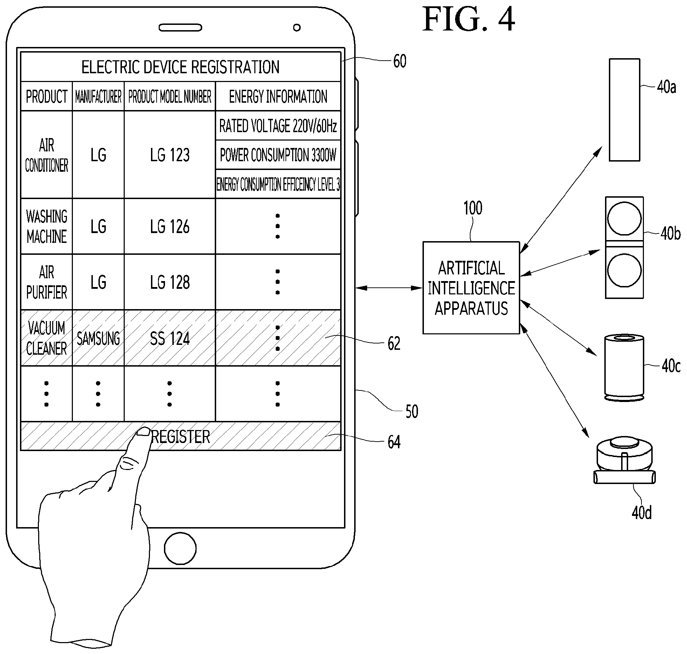

FIG. 4 is a view for explaining an electronic device registration process for predicting an amount of power consumption according to one embodiment of the present disclosure.

As illustrated in FIG. 4, the artificial intelligence apparatus 100 can receive a registration request for electronic devices for predicting an amount of power consumption from a user terminal 50.

Here, the user terminal 50 can display an electronic device registration window 60 on the display screen through an electronic device integrated app, register a number of electronic devices for predicting an amount of power consumption through the electronic device registration window 60, and then provide information on the registered electronic devices to the artificial intelligence apparatus 100.

In some cases, the artificial intelligence apparatus 100 may also receive user input for a request to register an electronic device through a user interface.

In another case, the artificial intelligence apparatus 100 may obtain product information from electronic devices capable of communication within the home, obtain corresponding energy information from an external server, and then automatically provide the product information and energy information of the obtained electronic devices to a registration window 60 displayed on the user terminal 50.

In this case, the user may simply and quickly input only product information about the electronic device that is not obtained from the artificial intelligence apparatus 100 through the registration window 60 displayed on the user terminal 50.

For example, the artificial intelligence apparatus 100 can obtain product information from air conditioners, washing machines, and air purifiers that are capable of communicating within a home and are manufactured by the same manufacturer, obtain corresponding energy information from the server of the manufacturer, and then automatically provide the product information and energy information of the obtained electronic devices to the registration window 60 displayed on the user terminal 50.

In addition, the user can register the vacuum cleaner by entering only product information 62 about another manufacturer's vacuum cleaner that is not obtained by the artificial intelligence apparatus 100 through the registration window 60 displayed on the user terminal 50.

Next, the user terminal 50 can register product information about the vacuum cleaner by transmitting it to the artificial intelligence apparatus 100 through user input by touching the registration button 64 of the registration window 60.

Here, the artificial intelligence apparatus 100 can estimate power consumption data such as usage patterns by additionally obtaining energy information of the vacuum cleaner corresponding to the product model number by communicating with an external server using only the product model number among the product information on the vacuum cleaner.

The artificial intelligence apparatus 100 can obtain power consumption data including energy information and usage pattern information for pre-registered electronic devices.

For example, the energy information may include at least one of the rated voltage, power consumption, and energy consumption efficiency of electronic devices, including an air conditioner 40a, a washing machine 40b, an air purifier 40c, and a vacuum cleaner 40d.

In addition, the usage pattern information may include at least one of the number of times the electronic device is used, the usage time of the electronic device, the usage cycle of the electronic device, the usage function of the electronic device, the number of times a specific function is used, the usage time of a specific function, and the usage cycle of a specific function.

In some cases, the artificial intelligence apparatus 100 may obtain power consumption data corresponding to the main function of a pre-registered electronic device.

In other words, the artificial intelligence apparatus 100 can obtain the same power consumption data for electronic devices with similar main functions among pre-registered electronic devices, and can obtain different power consumption data for electronic devices with different main functions among pre-registered electronic devices.

Here, the artificial intelligence apparatus 100 can obtain power consumption data that partially overlaps in the case of electronic devices among composite electronic devices having multiple main functions, in which some of the main functions overlap.

In another case, the artificial intelligence apparatus 100 can obtain power consumption data corresponding to whether movement is possible due to battery charging of a pre-registered electronic device.

In other words, the artificial intelligence apparatus 100 can obtain the same power consumption data in the case of mobile electronic devices among pre-registered electronic devices, and can obtain different power consumption data in the case of stationary electronic devices among pre-registered electronic devices.

In addition, the artificial intelligence apparatus 100 can perform a communication connection with a pre-registered electronic device and obtain power consumption data received from the electronic device to which the communication is connected.

Next, the artificial intelligence apparatus 100 matches the obtained power consumption data to pre-registered electronic devices and checks whether the power consumption data is matched to all pre-registered electronic devices to check whether there is a specific electronic device for which power consumption data has not been obtained.

Here, the artificial intelligence apparatus 100 can recognize an electronic device among pre-registered electronic devices in which a communication connection is not performed as a specific electronic device from which power consumption data is not received.

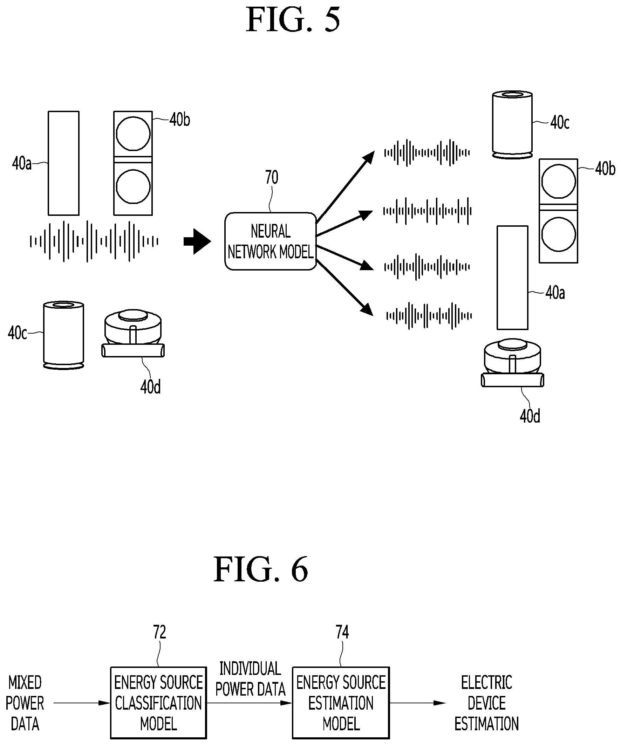

FIGS. 5 and 6 are views for explaining an energy source estimation process of a neural network model according to an embodiment of the present disclosure.

As illustrated in FIGS. 5 and 6, the artificial intelligence apparatus 100 may obtain mixed power data consumed by a plurality of electronic devices in the current household if there is a specific electronic device for which power consumption data has not been obtained, input the obtained mixed power data into a pre-learned neural network model 70 to classify it into a plurality of individual power data, and estimate individual power data consumed by the specific electronic device based on the classified individual power data.

Here, the artificial intelligence apparatus 100 can obtain mixed power data in which the power consumption waveforms of electronic devices consuming power at the current point in time in the home are mixed.

In addition, the artificial intelligence apparatus 100 can input the obtained mixed power data into a pre-learned neural network model 70 to classify it into a plurality of individual power data, and extract individual power data matching a specific electronic device from among the classified plurality of individual power data.

As illustrated in FIG. 5, mixed power data in which power consumption waveforms of an air conditioner 40a, a washing machine 40b, an air purifier 40c, and a vacuum cleaner 40d among electronic devices are mixed is input into a pre-learned neural network model 70 to be classified into a plurality of individual power data, and based on the classified individual power data, first individual power data consumed by the air conditioner 40a, second individual power data consumed by the washing machine 40b, third individual power data consumed by the air purifier 40c, and fourth individual power data consumed by the vacuum cleaner 40d can be extracted.

Accordingly, the artificial intelligence apparatus 100 can estimate the usage pattern of the vacuum cleaner 40d based on the fourth individual power data consumed by the vacuum cleaner 40d when the specific electronic device is a vacuum cleaner.

As illustrated in FIG. 6, the neural network model 70 may include an energy source classification model 72 and an energy source estimation model 74.

The artificial intelligence apparatus 100 can input mixed power data into an energy source classification model 72 to classify it into a plurality of individual power data, and input the individual power data into an energy source estimation model 74 to estimate a specific electronic device that is the energy source of the individual power data.

Additionally, the neural network model 70 can be pre-learned using power data of an electronic device having a specific power consumption waveform and energy information of the corresponding electronic device as input values.

Here, the neural network model 70 can be pre-learned using energy information of the electronic device, including rated voltage, power consumption, and energy consumption efficiency, as input values.

In addition, the artificial intelligence apparatus 100 can estimate power consumption data including energy information and usage pattern information for a specific electronic device based on individual power data having a specific power consumption waveform.

For example, the energy information may include at least one of the rated voltage, power consumption, and energy consumption efficiency of a specific electronic device.

Additionally, the usage pattern information may include at least one of the number of times a specific electronic device is used, the usage time of a specific electronic device, the usage cycle of a specific electronic device, and the usage function of a specific electronic device.

Here, energy information is input by a user when registering a specific electronic device and stored in memory, and usage pattern information can be estimated based on individual power data and stored in memory when extracting individual power data having a specific power consumption waveform.

In some cases, when registering a specific electronic device, the artificial intelligence apparatus 100 may obtain energy information about a specific electronic device through communication with an external server based on the product number when the user enters the product number for the specific electronic device.

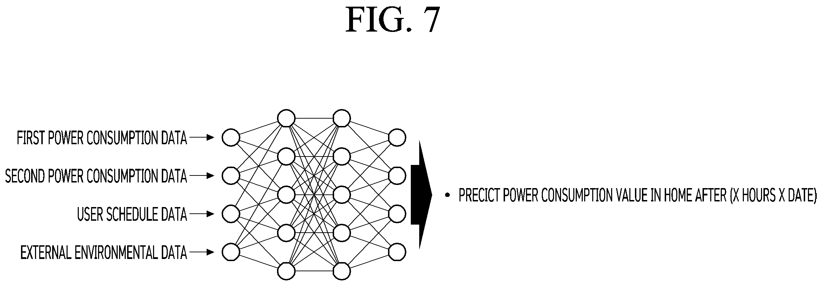

FIG. 7 is a view for explaining a process of predicting an amount of power consumption in a home using a neural network model according to an embodiment of the present disclosure.

As illustrated in FIG. 7, the artificial intelligence apparatus 100 can predict an amount of power consumption in a home based on power consumption data for all pre-registered electronic devices.

Here, the artificial intelligence apparatus 100 can predict an amount of power consumption in a home by inputting first power consumption data obtained from a pre-registered electronic device and second power consumption data estimated from a specific electronic device from which the first power consumption data has not been obtained into a pre-learned neural network model.

For example, a neural network model may include a time series forecasting model that predicts the value of t+1 at time t.

In addition, the artificial intelligence apparatus 100 can predict an amount of power consumption in a home by additionally inputting at least one of user schedule data and external environment data into a pre-learned neural network model.

Here, the artificial intelligence apparatus 100 can obtain user schedule data stored in memory or estimate user schedule data based on user activity patterns stored in memory and use it as an input value of a neural network model.

Additionally, the artificial intelligence apparatus 100 can obtain external environmental data including day of the week, weather, temperature, season, location, and regional information and use them as input values for a neural network model.

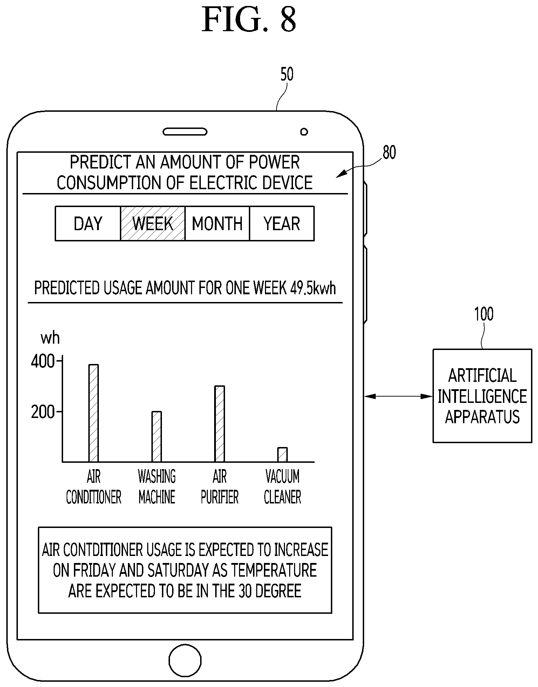

FIG. 8 is a view for explaining information on prediction results of an amount of power consumption in a home according to one embodiment of the present disclosure.

As illustrated in FIG. 8, the artificial intelligence apparatus 100 can generate prediction result information based on an amount of the predicted power consumption within the home.

Here, the artificial intelligence apparatus 100 can generate prediction result information including information on the usability and energy consumption status of each electronic device in a home.

For example, the artificial intelligence apparatus 100 can generate prediction result information and provide a prediction result of an amount of power consumption in a home to a user terminal 50.

The user terminal 50 can provide prediction result information including information on the usability and energy consumption status of each electronic device in a home through a prediction information window 80 of an amount of power consumption displayed on the display screen.

Here, the prediction information window 80 of an amount of power consumption can provide prediction result information of an amount of power consumption by period based on user schedule data, external environment data, and power consumption data for each electronic device, and can additionally provide a notification message for an electronic device for which an increase in an amount of power consumption is predicted.

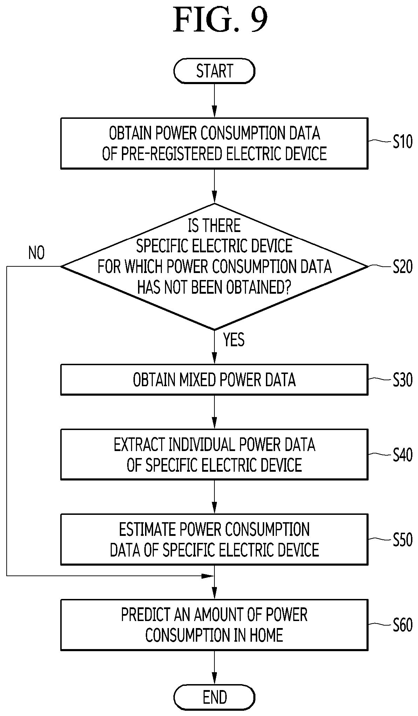

FIG. 9 is a flowchart for explaining a method for predicting power consumption of an artificial intelligence apparatus according to an embodiment of the present disclosure.

As illustrated in Fig. 9, the artificial intelligence apparatus can obtain power consumption data for a pre-registered electronic device (S10).

Here, the artificial intelligence apparatus can obtain power consumption data including energy information and usage pattern information for pre-registered electronic devices.

In some cases, the artificial intelligence apparatus may obtain power consumption data corresponding to the main function of a pre-registered electronic device.

In another case, the artificial intelligence apparatus may obtain power consumption data corresponding to whether the pre-registered electronic device is capable of moving due to battery charging.

In addition, the artificial intelligence apparatus may perform a communication connection with a pre-registered electronic device, store power consumption data received from the electronic device to which the communication is connected in a memory, and obtain power consumption data for the pre-registered electronic device from the memory.

Next, the artificial intelligence apparatus can check whether there is a specific electronic device for which power consumption data has not been obtained (S20).

Here, the artificial intelligence apparatus can match the obtained power consumption data to pre-registered electronic devices and check whether the power consumption data of all pre-registered electronic devices are matched to check whether there is a specific electronic device for which power consumption data has not been obtained.

The artificial intelligence apparatus can recognize a specific electronic device among pre-registered electronic devices that is not performing a communication connection as one from which power consumption data is not received.

In addition, the artificial intelligence apparatus can obtain mixed power data currently consumed in the home if there is a specific electronic device for which power consumption data has not been obtained (S30).

Here, the artificial intelligence apparatus can obtain mixed power data in which power consumption waveforms of electronic devices consuming power at the current point in time in a home are mixed.

Next, the artificial intelligence apparatus can classify the obtained mixed power data into a plurality of individual power data and extract individual power data matching a specific electronic device (S40).

Here, the artificial intelligence apparatus can input the obtained mixed power data into a pre-learned neural network model to classify it into a plurality of individual power data, and extract individual power data matching a specific electronic device from among the classified plurality of individual power data.

Next, the artificial intelligence apparatus can estimate power consumption data for a specific electronic device based on the extracted individual power data (S50).

Here, the artificial intelligence apparatus can estimate power consumption data including energy information and usage pattern information for a specific electronic device based on individual power data having a specific power consumption waveform.

Additionally, the artificial intelligence apparatus can predict an amount of power consumption in a home based on power consumption data for all pre-registered electronic devices (S60).

Here, the artificial intelligence apparatus can predict an amount of power consumption in a home by inputting first power consumption data obtained from a pre-registered electronic device and second power consumption data estimated from a specific electronic device from which the first power consumption data has not been obtained into a pre-learned neural network model.

In some cases, the artificial intelligence apparatus may also predict an amount of power consumption in a home by additionally inputting at least one of user schedule data and external environment data into a pre-trained neural network model.

Here, the artificial intelligence apparatus can obtain user schedule data stored in memory or estimate user schedule data based on user activity patterns stored in memory and use the data as input values for the neural network model, and can obtain external environment data including day of the week, weather, temperature, season, location, and regional information and use the data as input values for the neural network model.

Additionally, the artificial intelligence apparatus can generate prediction result information based on an amount of the predicted power consumption in a home.

Here, the prediction result information may include information on the usability and energy consumption status of each electronic device in the home.

In this way, the artificial intelligence apparatus of the present disclosure can accurately predict power consumption in a home by estimating power consumption data of electronic devices whose usage patterns are unknown using a neural network model.

In addition, the artificial intelligence apparatus of the present disclosure can provide accurate energy consumption information for each electronic device to the user by predicting power consumption in a home based on energy information and usage pattern information for the electronic device.

In addition, the artificial intelligence apparatus of the present disclosure can provide accurate, specific, and highly reliable home energy consumption information to the user by predicting an amount of power consumption in a home based on power consumption data of each electronic device, user schedule data, and external environment data using a neural network model.

### [Industrial Applicability]

The artificial intelligence apparatus according to the present disclosure has remarkable industrial applicability because it has the effect of accurately predicting an amount of power consumption in a home by estimating power consumption data of an electronic device whose usage pattern is unknown using a neural network model.

## Claims

1. An artificial intelligence apparatus (100) comprising:
a memory (170) storing power consumption data for electronic devices in a home; and
a processor (180) predicting power consumption in a home based on the power consumption data,
wherein the processor (180)
obtains power consumption data for pre-registered electronic devices,
checks whether there is a specific electronic device among the pre-registered electronic devices for which the power consumption data has not been obtained, and if there is a specific electronic device for which the power consumption data has not been obtained, obtains mixed power data consumed in a current home,
inputs the obtained mixed power data into a pre-learned neural network model for classification of the obtained mixed power data into a plurality of individual power data output,
extracts individual power data matching the specific electronic device from among the classified plurality of individual power data output of the pre-learned neural network model,
estimates power consumption data for the specific electronic device based on the extracted individual power data, and
predicts an amount of power consumption in a home based on power consumption data for all pre-registered electronic devices.

2. The artificial intelligence apparatus of claim 1,
wherein the processor (180), when obtaining power consumption data for the pre-registered electronic device, obtains power consumption data including energy information and usage pattern information for the pre-registered electronic device.

3. The artificial intelligence apparatus of claim 1,
wherein the processor (180), when obtaining power consumption data for the pre-registered electronic device, performs a communication connection with the pre-registered electronic device, stores the power consumption data received from the electronic device connected to the communication in the memory, and obtains the power consumption data for the pre-registered electronic device from the memory (170).

4. The artificial intelligence apparatus of claim 1,
wherein the processor (180), when checking whether there is a specific electronic device for which the power consumption data has not been obtained, matches the obtained power consumption data to the pre-registered electronic device, and checks whether the power consumption data has been matched to all of the pre-registered electronic devices to check whether there is a specific electronic device for which the power consumption data has not been obtained.

5. The artificial intelligence apparatus of claim 4,
wherein the processor (180) recognizes an electronic device among the pre-registered electronic devices in which a communication connection is not performed as a specific electronic device from which the power consumption data is not received.

6. The artificial intelligence apparatus of one of claim 1 to claim 4,
wherein the processor (180), when obtaining mixed power data consumed in the current home, obtains mixed power data in which power consumption waveforms of electronic devices consuming power at the current point in time in the home are mixed.

7. The artificial intelligence apparatus of claim 1,
wherein the neural network model (70) is pre-learned with power data of an electronic device having a specific power consumption waveform and energy information of the corresponding electronic device as input values.

8. The artificial intelligence apparatus of claim 1,
wherein the neural network model (70) is pre-learned with energy information of an electronic device including rated voltage, power consumption, and energy consumption efficiency as input values.

9. The artificial intelligence apparatus of one of claim 1 to claim 4,
wherein the processor (180), when estimating power consumption data for the specific electronic device, estimates power consumption data including energy information and usage pattern information for the specific electronic device based on individual power data having a specific power consumption waveform.

10. The artificial intelligence apparatus of one of claim 1 to claim 4,
wherein the processor (180), when predicting the amount of power consumption in a home, inputs the first power consumption data obtained from a pre-registered electronic device and the second power consumption data estimated from a specific electronic device from which the first power consumption data has not been obtained into a pre-learned neural network model (70) to predict the amount of power consumption in a home.

11. The artificial intelligence apparatus of claim 10,
wherein the neural network model (70) includes a time series forecasting model that predicts the t+1 value at time t.

12. The artificial intelligence apparatus of claim 10,
wherein the processor (180), when predicting the amount of power consumption in a home, at least one of the user schedule data and the external environment data is additionally input to the pre-learned neural network model (70) to predict the amount of power consumption in a home.

13. The artificial intelligence apparatus of one of claim 1 to claim 4,
wherein the processor (180), when predicting the amount of power consumption in a home, generates prediction result information based on an amount of the predicted power consumption in a home.

14. A method for predicting power consumption of an artificial intelligence apparatus (100) including a processor (180) for predicting an amount of power consumption in a home, comprising:
obtaining power consumption data for a pre-registered electronic device;
checking whether there is a specific electronic device among the pre-registered electronic devices for which the power consumption data has not been obtained;
obtaining mixed power data consumed in a current home if there is a specific electronic device for which the power consumption data has not been obtained;
inputting the obtained mixed power data into a pre-learned neural network model for classification of the obtained mixed power data into a plurality of individual power data output;
extracting the individual power data matching the specific electronic device from among the classified plurality of individual power data output of the pre-learned neural network model;
estimating power consumption data for the specific electronic device based on the extracted individual power data; and
predicting the amount of power consumption in a home based on power consumption data for all the pre-registered electronic devices.

## Patentansprüche

1. Vorrichtung für künstliche Intelligenz (100), umfassend:
einen Speicher (170), der Stromverbrauchsdaten für elektronische Geräte in einem Haushalt speichert; und
einen Prozessor (180), der den Stromverbrauch in einem Haushalt auf der Grundlage der Stromverbrauchsdaten vorhersagt,
wobei der Prozessor (180)
Stromverbrauchsdaten für vorregistrierte elektronische Geräte erlangt, prüft, ob es unter den vorregistrierten elektronischen Geräten ein bestimmtes elektronisches Gerät gibt, für das die Stromverbrauchsdaten nicht erlangt wurden, und falls es ein bestimmtes elektronisches Gerät gibt, für das die Stromverbrauchsdaten nicht erlangt wurden, gemischte Leistungsdaten, die in einem aktuellen Haushalt verbraucht werden, erlangt,
die erhaltenen gemischten Leistungsdaten in ein vorab angelerntes neuronales Netzwerkmodell eingibt, um die erhaltenen gemischten Leistungsdaten in eine Vielzahl individueller Leistungsdaten-Ausgaben zu klassifizieren,
aus der klassifizierten Vielzahl individueller Leistungsdaten-Ausgaben des vorab angelernten neuronalen Netzwerkmodells individuelle Leistungsdaten extrahiert, die dem bestimmten elektronischen Gerät entsprechen,
Stromverbrauchsdaten für das bestimmte elektronische Gerät auf der Grundlage der extrahierten individuellen Leistungsdaten schätzt, und
eine Menge des Stromverbrauchs in einem Haushalt auf der Grundlage von Stromverbrauchsdaten für alle vorregistrierten elektronischen Geräte vorhersagt.

2. Vorrichtung für künstliche Intelligenz nach Anspruch 1,
wobei der Prozessor (180) beim Erlangen von Stromverbrauchsdaten für das vorregistrierte elektronische Gerät Stromverbrauchsdaten erlangt, die Energieinformationen und Nutzungsmusterinformationen für das vorregistrierte elektronische Gerät umfassen.

3. Vorrichtung für künstliche Intelligenz nach Anspruch 1,
wobei der Prozessor (180) beim Erlangen von Stromverbrauchsdaten für das vorregistrierte elektronische Gerät eine Kommunikationsverbindung mit dem vorregistrierten elektronischen Gerät herstellt, die von dem mit der Kommunikation verbundenen elektronischen Gerät empfangenen Stromverbrauchsdaten im Speicher speichert und die Stromverbrauchsdaten für das vorregistrierte elektronische Gerät aus dem Speicher (170) erlangt.

4. Vorrichtung für künstliche Intelligenz nach Anspruch 1,
wobei der Prozessor (180) beim Prüfen, ob es ein bestimmtes elektronisches Gerät gibt, für das die Stromverbrauchsdaten nicht erlangt wurden, die erlangten Stromverbrauchsdaten dem vorregistrierten elektronischen Gerät zuordnet und prüft, ob die Stromverbrauchsdaten allen vorregistrierten elektronischen Geräten zugeordnet wurden, um zu prüfen, ob es ein bestimmtes elektronisches Gerät gibt, für das die Stromverbrauchsdaten nicht erlangt wurden.

5. Vorrichtung für künstliche Intelligenz nach Anspruch 4,
wobei der Prozessor (180) ein elektronisches Gerät unter den vorregistrierten elektronischen Geräten, bei dem keine Kommunikationsverbindung hergestellt wird, als bestimmtes elektronisches Gerät erkennt, von dem die Stromverbrauchsdaten nicht empfangen werden.

6. Vorrichtung für künstliche Intelligenz nach einem der Ansprüche 1 bis 4,
wobei der Prozessor (180) beim Erlangen gemischter Leistungsdaten, die im aktuellen Haushalt verbraucht werden, gemischte Leistungsdaten erlangt, in denen Stromverbrauchs-Wellenformen von elektronischen Geräten, die zum aktuellen Zeitpunkt im Haushalt Leistung verbrauchen, gemischt sind.

7. Vorrichtung für künstliche Intelligenz nach Anspruch 1,
wobei das neuronale Netzwerkmodell (70) vorab angelernt ist, wobei als Eingabewerte Leistungsdaten eines elektronischen Geräts mit einer spezifischen Stromverbrauchs-Wellenform und Energieinformationen des entsprechenden elektronischen Geräts verwendet werden.

8. Vorrichtung für künstliche Intelligenz nach Anspruch 1,
wobei das neuronale Netzwerkmodell (70) vorab angelernt ist, wobei als Eingabewerte Energieinformationen eines elektronischen Geräts, einschließlich Nennspannung, Stromverbrauch und Energieverbrauchseffizienz, verwendet werden.

9. Vorrichtung für künstliche Intelligenz nach einem der Ansprüche 1 bis 4,
wobei der Prozessor (180) beim Schätzen von Stromverbrauchsdaten für das bestimmte elektronische Gerät Stromverbrauchsdaten schätzt, die Energieinformationen und Nutzungsmusterinformationen für das bestimmte elektronische Gerät umfassen, auf der Grundlage individueller Leistungsdaten mit einer spezifischen Stromverbrauchs-Wellenform.

10. Vorrichtung für künstliche Intelligenz nach einem der Ansprüche 1 bis 4,
wobei der Prozessor (180) beim Vorhersagen der Menge des Stromverbrauchs in einem Haushalt die ersten Stromverbrauchsdaten, die von einem vorregistrierten elektronischen Gerät erlangt wurden, und die zweiten Stromverbrauchsdaten, die aus einem bestimmten elektronischen Gerät geschätzt wurden, von dem die ersten Stromverbrauchsdaten nicht erlangt wurden, in ein vorab angelerntes neuronales Netzwerkmodell (70) eingibt, um die Menge des Stromverbrauchs in einem Haushalt vorherzusagen.

11. Vorrichtung für künstliche Intelligenz nach Anspruch 10,
wobei das neuronale Netzwerkmodell (70) ein Zeitreihenprognosemodell umfasst, das den t+1-Wert zum Zeitpunkt t vorhersagt.

12. Vorrichtung für künstliche Intelligenz nach Anspruch 10,
wobei der Prozessor (180) beim Vorhersagen der Menge des Stromverbrauchs in einem Haushalt zusätzlich mindestens eines von Benutzerdienstplandaten und Daten der externen Umgebung in das vorab angelernte neuronale Netzwerkmodell (70) eingibt, um die Menge des Stromverbrauchs in einem Haushalt vorherzusagen.

13. Vorrichtung für künstliche Intelligenz nach einem der Ansprüche 1 bis 4,
wobei der Prozessor (180) beim Vorhersagen der Menge des Stromverbrauchs in einem Haushalt Vorhersageergebnisinformationen auf der Grundlage einer Menge des vorhergesagten Stromverbrauchs in einem Haushalt erzeugt.

14. Verfahren zum Vorhersagen des Stromverbrauchs einer Vorrichtung für künstliche Intelligenz (100), die einen Prozessor (180) zum Vorhersagen einer Menge des Stromverbrauchs in einem Haushalt umfasst, umfassend:
Erlangen von Stromverbrauchsdaten für ein vorregistriertes elektronisches Gerät;
Prüfen, ob es unter den vorregistrierten elektronischen Geräten ein bestimmtes elektronisches Gerät gibt, für das die Stromverbrauchsdaten nicht erlangt wurden;
Erlangen gemischter Leistungsdaten, die in einem aktuellen Haushalt verbraucht werden, falls es ein bestimmtes elektronisches Gerät gibt, für das die Stromverbrauchsdaten nicht erlangt wurden;
Eingeben der erhaltenen gemischten Leistungsdaten in ein vorab angelerntes neuronales Netzwerkmodell zur Klassifizierung der erhaltenen gemischten Leistungsdaten in eine Vielzahl individueller Leistungsdaten-Ausgaben;
Extrahieren der individuellen Leistungsdaten, die dem bestimmten elektronischen Gerät entsprechen, aus der klassifizierten Vielzahl individueller Leistungsdaten-Ausgaben des vorab angelernten neuronalen Netzwerkmodells;
Schätzen von Stromverbrauchsdaten für das bestimmte elektronische Gerät auf der Grundlage der extrahierten individuellen Leistungsdaten; und
Vorhersagen der Menge des Stromverbrauchs in einem Haushalt auf der Grundlage von Stromverbrauchsdaten für alle vorregistrierten elektronischen Geräte.

## Revendications

1. Appareil d'intelligence artificielle (100) comprenant :
une mémoire (170) stockant des données de consommation d'énergie pour des appareils électroniques dans un foyer ; et
un processeur (180) prédisant la consommation d'énergie dans un foyer sur la base des données de consommation d'énergie,
dans lequel le processeur (180)
obtient des données de consommation d'énergie pour des appareils électroniques préenregistrés, vérifie s'il existe, parmi les appareils électroniques préenregistrés, un appareil électronique spécifique pour lequel les données de consommation d'énergie n'ont pas été obtenues, et, s'il existe un appareil électronique spécifique pour lequel les données de consommation d'énergie n'ont pas été obtenues, obtient des données de puissance mixte consommées dans un foyer actuel,
introduit les données de puissance mixte obtenues dans un modèle de réseau neuronal préalablement appris pour classifier les données de puissance mixte obtenues en une pluralité de sorties de données de puissance individuelles,
extrait, parmi la pluralité de sorties de données de puissance individuelles classifiées du modèle de réseau neuronal préalablement appris, des données de puissance individuelles correspondant à l'appareil électronique spécifique,
estime des données de consommation d'énergie pour l'appareil électronique spécifique sur la base des données de puissance individuelles extraites, et
prédit une quantité de consommation d'énergie dans un foyer sur la base des données de consommation d'énergie pour tous les appareils électroniques préenregistrés.

2. Appareil d'intelligence artificielle selon la revendication 1,
dans lequel le processeur (180), lors de l'obtention des données de consommation d'énergie pour l'appareil électronique préenregistré, obtient des données de consommation d'énergie comprenant des informations d'énergie et des informations de profil d'utilisation pour l'appareil électronique préenregistré.

3. Appareil d'intelligence artificielle selon la revendication 1,
dans lequel le processeur (180), lors de l'obtention des données de consommation d'énergie pour l'appareil électronique préenregistré, établit une connexion de communication avec l'appareil électronique préenregistré, stocke dans la mémoire les données de consommation d'énergie reçues de l'appareil électronique connecté à la communication, et obtient les données de consommation d'énergie pour l'appareil électronique préenregistré à partir de la mémoire (170).

4. Appareil d'intelligence artificielle selon la revendication 1,
dans lequel le processeur (180), lors de la vérification visant à déterminer s'il existe un appareil électronique spécifique pour lequel les données de consommation d'énergie n'ont pas été obtenues, associe les données de consommation d'énergie obtenues à l'appareil électronique préenregistré, et vérifie si les données de consommation d'énergie ont été associées à tous les appareils électroniques préenregistrés afin de vérifier s'il existe un appareil électronique spécifique pour lequel les données de consommation d'énergie n'ont pas été obtenues.

5. Appareil d'intelligence artificielle selon la revendication 4,
dans lequel le processeur (180) reconnaît, parmi les appareils électroniques préenregistrés, un appareil électronique pour lequel une connexion de communication n'est pas établie comme un appareil électronique spécifique à partir duquel les données de consommation d'énergie ne sont pas reçues.

6. Appareil d'intelligence artificielle selon l'une des revendications 1 à 4,
dans lequel le processeur (180), lors de l'obtention des données de puissance mixte consommées dans le foyer actuel, obtient des données de puissance mixte dans lesquelles des formes d'onde de consommation de puissance d'appareils électroniques consommant de la puissance au moment actuel dans le foyer sont mélangées.

7. Appareil d'intelligence artificielle selon la revendication 1,
dans lequel le modèle de réseau neuronal (70) est préalablement appris avec, en tant que valeurs d'entrée, des données de puissance d'un appareil électronique ayant une forme d'onde de consommation de puissance spécifique et des informations d'énergie de l'appareil électronique correspondant.

8. Appareil d'intelligence artificielle selon la revendication 1,
dans lequel le modèle de réseau neuronal (70) est préalablement appris avec, en tant que valeurs d'entrée, des informations d'énergie d'un appareil électronique comprenant une tension nominale, une consommation de puissance et une efficacité de consommation d'énergie.

9. Appareil d'intelligence artificielle selon l'une des revendications 1 à 4,
dans lequel le processeur (180), lors de l'estimation des données de consommation d'énergie pour l'appareil électronique spécifique, estime des données de consommation d'énergie comprenant des informations d'énergie et des informations de profil d'utilisation pour l'appareil électronique spécifique sur la base de données de puissance individuelles ayant une forme d'onde de consommation de puissance spécifique.

10. Appareil d'intelligence artificielle selon l'une des revendications 1 à 4,
dans lequel le processeur (180), lors de la prédiction de la quantité de consommation d'énergie dans un foyer, introduit dans un modèle de réseau neuronal préalablement appris (70) les premières données de consommation d'énergie obtenues à partir d'un appareil électronique préenregistré et les deuxièmes données de consommation d'énergie estimées à partir d'un appareil électronique spécifique à partir duquel les premières données de consommation d'énergie n'ont pas été obtenues, afin de prédire la quantité de consommation d'énergie dans un foyer.

11. Appareil d'intelligence artificielle selon la revendication 10,
dans lequel le modèle de réseau neuronal (70) comprend un modèle de prévision de séries temporelles qui prédit la valeur t+1 au moment t.

12. Appareil d'intelligence artificielle selon la revendication 10,
dans lequel le processeur (180), lors de la prédiction de la quantité de consommation d'énergie dans un foyer, introduit en outre au moins l'une des données de planning de l'utilisateur et des données de l'environnement externe dans le modèle de réseau neuronal préalablement appris (70) afin de prédire la quantité de consommation d'énergie dans un foyer.

13. Appareil d'intelligence artificielle selon l'une des revendications 1 à 4,
dans lequel le processeur (180), lors de la prédiction de la quantité de consommation d'énergie dans un foyer, génère des informations de résultat de prédiction sur la base d'une quantité de la consommation d'énergie prédite dans un foyer.

14. Procédé de prédiction de la consommation d'énergie d'un appareil d'intelligence artificielle (100) comprenant un processeur (180) pour prédire une quantité de consommation d'énergie dans un foyer, comprenant :
obtenir des données de consommation d'énergie pour un appareil électronique préenregistré ;
vérifier s'il existe, parmi les appareils électroniques préenregistrés, un appareil électronique spécifique pour lequel les données de consommation d'énergie n'ont pas été obtenues ;
obtenir des données de puissance mixte consommées dans un foyer actuel s'il existe un appareil électronique spécifique pour lequel les données de consommation d'énergie n'ont pas été obtenues ;
introduire les données de puissance mixte obtenues dans un modèle de réseau neuronal préalablement appris pour classifier les données de puissance mixte obtenues en une pluralité de sorties de données de puissance individuelles ;
extraire les données de puissance individuelles correspondant à l'appareil électronique spécifique parmi la pluralité de sorties de données de puissance individuelles classifiées du modèle de réseau neuronal préalablement appris ;
estimer des données de consommation d'énergie pour l'appareil électronique spécifique sur la base des données de puissance individuelles extraites ; et
prédire la quantité de consommation d'énergie dans un foyer sur la base des données de consommation d'énergie pour tous les appareils électroniques préenregistrés.
